# EUROPEAN PATENT APPLICATION

(11) **EP 1 201 705 A1**
(43) Date of publication of application: **02.05.2002**
(21) Application number: 01308782.0
(22) Date of filing: 16.10.2001
(51) Int. Cl.: C08K 3/36, C08K 9/06, C08K 5/14, C08L 83/04, C07C 409/00

(54) **Extrudable silicone rubber composition and method of manufacturing articles extruded from silicone rubber**

(30) Priority: 25.10.2000 JP 2000325829
(71) Applicant: Dow Corning Toray Silicone Company Ltd., Ichihara-shi, Chiba Prefecture (JP)
(72) Inventor: Baba, Katsuya, c/o Dow Corning Toray Silicone Ltd., Ichihara-shi, Chiba Prefecture (JP); Hirai, Kazuo, c/o Dow Corning Toray Silicone Ltd., Ichihara-shi, Chiba Prefecture (JP); Homna, Hiroshi, Dow Corning Toray Silicone Ltd., Ichihara-shi, Chiba Prefecture (JP)
(74) Representative: Donlan, Andrew Michael

(57) **Abstract**

An extrudable silicone rubber composition comprising:
(A) a silicone rubber base compound comprising:-
   a diorganopolysiloxane gum (a-1) ;
   a treated or untreated reinforcing silica (a-2);
(B) an organic peroxide represented by the following general formula:
   R - COOOCOO - R¹ - OOCOOOC - R and (C) an alkyl-type organic peroxide.

The composition provides an extrudable silicone rubber composition suitable for rapid curing, the resulting extruded articles being substantially free from of blooming and surface tackiness.

## Description

The present invention relates to an extrudable silicone rubber composition and to a method of manufacturing articles extruded from silicone rubber. More specifically, the invention relates to a silicone rubber composition suitable for the manufacture of extruded articles such as tubes, sheets, coatings for electric wires, construction gaskets, etc., as well as to a method of manufacturing the aforementioned extruded articles.

Silicone rubber possesses excellent heat-resistant, weather-proof, electric, and other useful properties and therefore is widely used for manufacturing extruded articles such as tubes, tapes, sheets, electric wire coatings, construction gaskets, and the like. One group of curing agents which are currently used for curing silicone rubber compositions in manufacturing the aforementioned extruded articles are chlorinated benzoyl peroxides such as 2,4-dichlorobenzoyl peroxide, chlorobenzoyl peroxide and the like. However, an unfortunate side effect of curing silicone rubber compositions containing chlorinated benzoyl peroxides, is the emission of a strong odour during and subsequent to the curing process, and furthermore the surfaces of the resulting cured product are tacky (or sticky) to the touch and are subject to blooming. As used herein, blooming refers to a whitening of the moulding surface due to gradual precipitation at the moulding surface of degradation products from the curing agent.

As a consequence, Japanese Laid Open (Kokai or Unexamined) Patent Application Number Sho 59-18758 (18,758/1984) teaches a silicone rubber composition in which bis (ortho-methylbenzoyl) peroxide is blended as curing agent, while Japanese Laid Open (Kokai or Unexamined) Patent Application Number Sho 62-185750 (185,750/1987)/US 4743671 (May 10, 1988) teaches a silicone rubber composition in which bis (para-methylbenzoyl) peroxide is blended as curing agent. Whilst the resulting silicone rubber compositions were free of blooming, these silicone rubber compositions, still possess disadvantages that can render them unusable depending on application. Thus, they exhibit a slow cure rate, and suffer from a strong tendency for bubbles to be produced within mouldings, with the result that the mouldings themselves suffer from reduced electrical insulation performance and are tacky to the touch.

The present invention is a solution to such problems by the use of a special class of organoperoxide to cure silicone rubber base compounds in combination with an alkyl peroxide and the result is a high cure rate and silicone rubber extrusion mouldings and will be free of surface tackiness and blooming.

More particularly, it is an object of the invention to provide an extrusion-grade silicone rubber composition that has a high cure rate, and that provides silicone rubber extrusion mouldings that post-cure and that are be free of surface tackiness and blooming.

These and other features of the invention will become apparent from a consideration of the detailed description.

The invention relates to an extrudable silicone rubber composition comprising:
(A) a silicone rubber base compound comprising:-
   a diorganopolysiloxane gum (a-1);
   a treated or untreated reinforcing silica (a-2);
(B) an organic peroxide represented by the following general formula:

   R - COOOCOO - R¹ - OOCOOOC - R

   wherein R¹ is an alkylene group with 1 to 10 carbon atoms R is selected from an alkyl group, an alkoxy group, an - SiR²₃ group, a -CH₂SiR²₃ group and a -Ph-R³_{*x*} group
   R² is an alkyl or alkoxy group;
   Ph is a phenyl group when *x* is zero and a phenylene group when *x* is 1, 2 or 3;
   R³ is an alkyl group, an alkoxy group, an SiR²₃ group, or a -CH₂SiR²₃ group;
   *x* has a value of from 0 to 3; and
(C) an alkyl-type organic peroxide

The invention also relates to a method of fabricating silicone rubber extrusion mouldings. It is characterized by introducing the extrusion-grade silicone rubber composition into an extrusion mould, forming an uncured silicone rubber moulding, and then forming a silicone rubber moulding by curing the uncured silicone rubber moulding at an ambient pressure in a hot gas of 200 to 600 °C.

Component (A) forms the base of the composition. The diorganopolysiloxane gum (a-1) of component (A) has a viscosity at 25 °C of at least 1,000,000 mPa·s, preferably at least 5,000,000 mPa·s. In addition, the Williams plasticity of component (a-1) should be at least 50, preferably at least 100, and more preferably at least 120. Component (a-1) should have a degree of polymerisation (DP) of 3,000 to 20,000, and a weight-average molecular weight of at least 20 × 10⁴. Component (a-1) is exemplified by diorganopolysiloxane gums with the average unit formula R_{*a*}SiO₍₄₋_{*a*}_{)/2} in which a is 1.8 to 2.3, and R is a monovalent hydrocarbyl or halogenated alkyl group. The monovalent hydrocarbyl group R can be an alkyl group such as methyl, ethyl, and propyl; an alkenyl group such as vinyl and allyl; a cycloalkyl group such as cyclohexyl; an aralkyl group such as β-phenylethyl; or an aryl group such as phenyl and tolyl. The halogenated alkyl group R can be 3,3,3-trifluoropropyl or 3-chloropropyl. At least 50 mole percent of the R groups should be methyl. In addition, a silicon-bonded alkenyl group should be present in the molecule to provide good curing characteristics. The alkenyl group can be a vinyl, allyl, propenyl, or hexenyl group but it is preferably a vinyl group. The vinyl group should constitute 0.01 to 0.4 mole percent of the total organic groups present in the molecule.

The molecular structure of component (a-1) can be a straight chain or a branch-containing straight chains. Component (a-1) may be a homopolymer, copolymer, or mixture of such polymers. The siloxane unit or units of this component can be exemplified by units such as dimethylsiloxane, methylvinylsiloxane, methylphenylsiloxane, and (3,3,3-trifluoropropyl)methylsiloxane units. The group or groups present in the molecular chain terminal positions can be trimethylsiloxy, dimethylvinylsiloxy, methylvinylhydroxysiloxy, or dimethylhydroxysiloxy groups. This diorganopolysiloxane gum can be a trimethylsiloxyendblocked methylvinylpolysiloxane gum, a trimethylsiloxyendblocked dimethylsiloxane-methylvinylsiloxane copolymer gum, a dimethylvinylsiloxy-endblocked dimethylpolysiloxane gum, a dimethylvinylsiloxy-endblocked dimethylsiloxane-methylvinylsiloxane copolymer gum, a dimethylhydroxysiloxyendblocked dimethylsiloxane-methylvinylsiloxane copolymer gum, a methylvinylhydroxysiloxy-endblocked dimethylsiloxanemethylvinylsiloxane-methylphenylsiloxane copolymer gum, or a methylvinylhydroxysiloxy-endblocked dimethylsiloxanemethylvinylsiloxane-(3,3,3-trifluoropropyl)methylsiloxane copolymer gum.

The treated or untreated reinforcing silica (a-2) is an essential component, and it provides the composition with an ability to maintain its extruded shape, and imparts mechanical strength to the cured silicone rubber. The reinforcing silica can be used in an untreated form, for example, a dry-process silica such as fumed silica, or a wet-process silica such as precipitated silica. Alternatively the reinforcing silicas (a-2) as exemplified above may be used after surface treatment with an hydrophobing agent, for example, an organosilicon compound such as an organochlorosilane, hexaorganodisilazane, or a diorganocyclosiloxane oligomer. Component (a-2) should have a BET specific surface area of at least 50 m²/g. Component (a-2) should be used in the range of 15 to 150 weight parts per 100 weight parts of the component (a-1). The use of less than 15 weight parts results in a reduced mechanical strength, and in a reduced ability to maintain an extruded shape. On the other hand, it would be difficult to blend more than about 150 weight parts into component (a-1).

The hydrophobing agents which may be used for treating the reinforcing silica (a-2) (hereafter referred to as component (a-3)) may preferably be a silanol-endblocked organosiloxane oligomer or an hexaorganodisilazane. Component (a-3) facilitates uniform dispersion of component (a-2) in component (a-1). Component (a-3) additionally inhibits crepe hardening of component (A). The silanol-endblocked diorganosiloxane oligomer can be a silanol-endblocked dimethylsiloxane oligomer, a silanol-endblocked methylvinylsiloxane oligomer, a silanol-endblocked dimethylsiloxane-methylvinylsiloxane oligomer, a silanol-endblocked dimethylsiloxane-methylvinylsiloxanemethylphenylsiloxane oligomer, or a silanol-endblocked dimethylsiloxane-methylphenylsiloxane oligomer. The hexaorganodisilazanes can be hexamethyldisilazane or divinyltetramethyldisilazane. Component (a-3) is an optional ingredient in the present invention and may be present in the composition in an amount of 0 to 50 parts by weight, and preferably 1.0 to 40 parts by weight, based on 100 parts by weight of component (a-1).

Component (A) is prepared by uniformly mixing the aforementioned components (a-1), (a-2), and optionally (a-3) at a temperature of 150°C to 220°C.

Organoperoxide (B) is the curing agent for the composition. It has the formula R - COOOCOO - R¹ - OOCOOOC - R in which R¹ is a C₁ to C₁₀ alkylene group, R is an alkyl group, an alkoxy group, the group -SiR²₃, the group-CH₂SiR²₃, or the group -Ph-R³_{*x*} where R² is an alkyl or alkoxy group, Ph is a phenyl group when *x* is zero and a phenylene group when *x* is 1, 2 or 3; R³ is an alkyl group, an alkoxy group, the group -SiR²₃, or the group -CH₂SiR²₃, and *x* is 0 to 3. Alkyl groups suitable for R are methyl, ethyl, or propyl. Alkoxy groups suitable for R are methoxy, ethoxy, or propoxy groups. Alkyl groups suitable for R² are methyl, ethyl, or propyl, and alkoxy groups suitable for R² are methoxy, ethoxy, or propoxy.

Component (B) can also have a structure as shown below in which R and R¹ are the same as defined above.

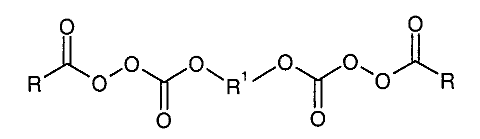

Organoperoxide (B) is exemplified by compounds such as: 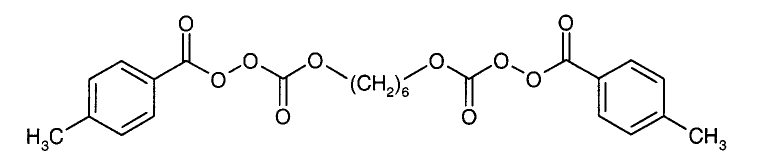 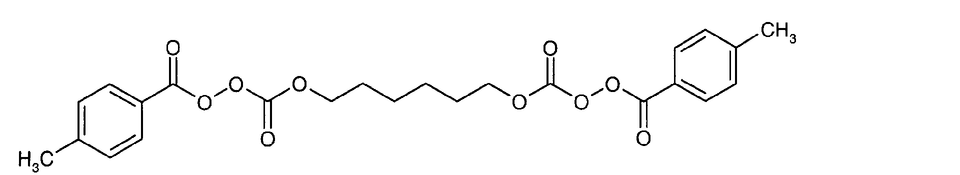 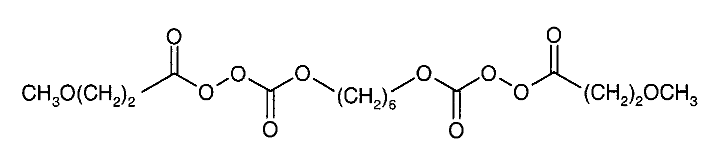 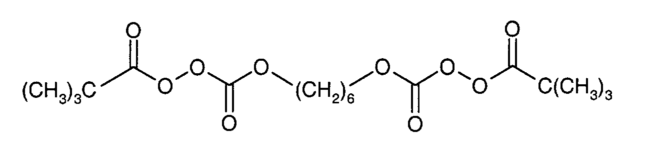 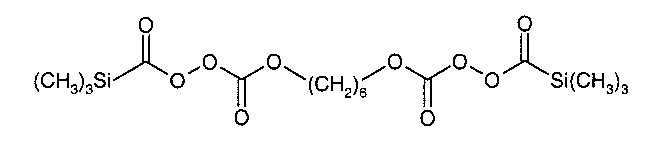 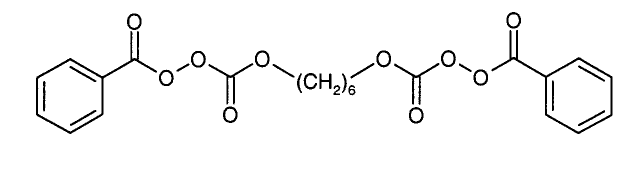 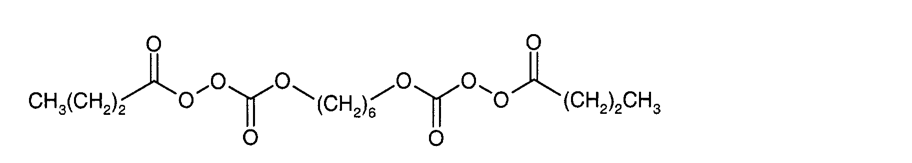 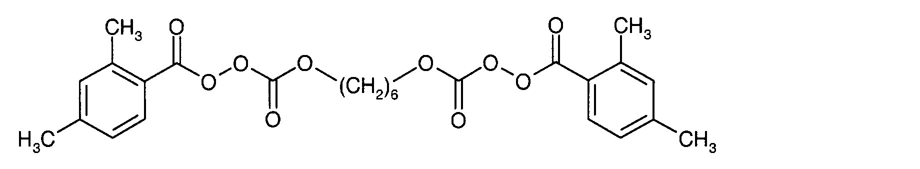 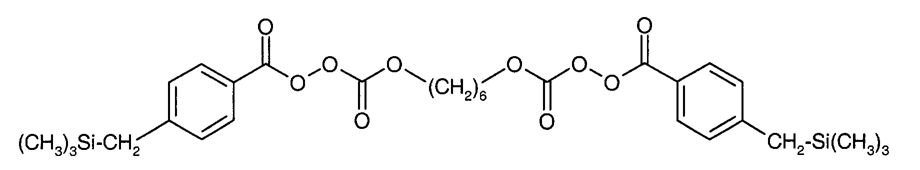 Component (B) should have a maximum particle size no greater than 50 µm and is preferably added in an amount of 0.1 to 10 parts by weight based on 100 parts by weight of component (A). However, admixture of component (B) into the silicone rubber base compound can be carried out with component (B) in a paste form dispersed in a dimethylpolysiloxane oil. In this case, component (B) and the dimethylpolysiloxane oil should be used in a ratio of (1:0.1) to (1:10).

While the essential components of the composition are components (A) and (B), it can contain other additives typically added to silicone rubber compositions provided the additives do not impair its function. These additives include inorganic fillers such as calcium carbonate, carbon black, aluminium hydroxide, and alumina; heat stabilizers such as cerium hydroxide,

Component (C) is an alkyl-type organic peroxide which is used as an additional curing agent. Organic peroxide catalysts function through the generation of radicals. An alkyl-type organic peroxide means an organic peroxide whereby the generated radical is initially generated on an alkyl group as opposed to an acyl-type peroxide such as 2,4-dichlorobenzoyl peroxide where the radical is initially generated on an acyl group.

The use of the combination of component (B), component (C) as curing agent either completely eliminates or significantly diminishes tackiness of the surface of silicone-rubber products obtained by curing the composition of the invention. The aforementioned alkyl-type organic peroxide may be selected from, for example, the following compounds: dicumyl peroxide, 2,5-dimethyl-2,5-di (t-butylperoxy) hexane, di-t-butylperoxide, and t-butylcumylperoxide. Dicumyl peroxide is an alkyl-peroxide because the initial radical is generated on the isopropyl group attached to the benzene ring. Component (C) should be added in an amount of 0.1 to 10 parts by weight, preferably 0.01 to 5 parts by weight based on 100 parts by weight of component (A). the addition of component (C) into the silicone rubber base compound can be carried out in the form of a paste comprising component (C) dispersed in, for example, a dimethylpolysiloxane oil. Hence, components (B) and (C) may be considered to be a silicone rubber curing agent composition. Normally, components (B) and (C) should be used in a weight ratio of from 1:0.1 to 1:10, preferably in a weight ratio of from 1:0.3 to 1:1.

In a further alternative components (B) and (C) may both be combined in a single paste dispersed in, for example, a dimethylpolysiloxane oil.

While the essential components of the composition are components (A), (B) and (C), the composition may also contain one or more other optional additives which may be used in silicone rubber compositions provided the additives do not impair properties of the resulting product. These additives may include, for example, inorganic fillers such as quartz powder, calcium carbonate, diatomaceous earth, carbon black, aluminium hydroxide and alumina; heat stabilizers such as cerium hydroxide, cerium silanolate and cerium salts of fatty acids, mould release agents such as higher fatty acids or metal salts of higher fatty acids, such as a stearic acid, zinc stearate, calcium stearate, pigments and flame retarding agents such as platinum compounds, fumed titanium dioxide, zinc carbonate.

The composition is prepared by intermixing components (A), (B) and (C) to homogeneity. Components (A), (B) and (C) can be intermixed using devices typically used for preparing silicone rubbers such as a two-roll mill, a continuous kneader-extruder, or a similar machine used in the production of a silicone rubber.

The composition of components (A), (B) and (C) should have a T₁₀ value no greater than 0.25 minute, and a T₉₀ value no greater than 1.0 minute. T₁₀ is the time required for the torque, measured at 130°C/10 minutes using a JSR Model III Curastometer to reach 10 percent of the maximum torque. T₉₀ is the time required for the torque, again measured at 130°C/10 minutes using a JSR Modell III Curastometer to reach 90 percent of the maximum torque. The JIS Model III Curastometer is a vulcanisation testing instrument for determining vulcanisation rates of standard rubber, and for measuring vulcanisation rates of standard rubber according to the specifications of the Society of the Japanese Rubber Industry Standard, as detailed in the Journal of the Rubber Industry of Japan, Volume 46, Pages 53 to 61 (1973).

Silicone rubber mouldings can be fabricated from the composition by introducing the composition into a continuous extrusion mould to form an uncured silicone rubber moulding, and subjecting the uncured silicone rubber moulding to cure at ambient pressure in a hot gas of 200 to 600°C, preferably 200 to 500°C, to produce the silicone rubber moulding. The extrusion mould can be any extrusion mould used for extrusion moulding of silicone rubber compositions such as single-screw extrusion moulds.

When heated, the aforementioned composition of the invention quickly cures, and after curing produces a product formed from silicone rubber, the product having a surface completely free of tackiness or a surface with significantly reduced tackiness. In view of the above properties, the composition is very useful for the manufacture of extruded products, such as tubes, tapes, sheets, electric insulation materials, construction gaskets, etc.

The composition has a high cure rate upon heating, and it cures to provide a substantially tack -free surface or at least having a surface with significantly reduced tackiness when compared with the prior art products. The composition is useful in applications where these properties are important, such as extrusion moulding stock for tubes, tapes, sheet, coatings for electric wire and cable, and construction and architectural gaskets.

### EXAMPLES

The following examples set forth the invention in more detail, including Working Examples to show the extrusion-grade silicone rubber composition and method of fabricating mouldings. In these examples, all parts are parts by weight, and values of viscosity are obtained at 25°C. The following methods are used to measure curing characteristics and evaluate silicone rubber mouldings for bubbles.

### CURING PROPERTIES

### Curing Characteristics

A small piece of silicone rubber composition is placed on the lower die of a JSR Model III Curastometer. Heat and shearing oscillation at an amplitude angle of 3° are applied, and the viscoelastic stress, i.e., the torque value, accompanying curing is measured. Two values are determined from a curing curve measured at 130 °C/10 minutes, one value is the time required to reach 10 percent of the maximum torque value achieved during curing designated T₁₀, and the other is the time required to reach 90 percent of the maximum torque value achieved during curing designated T₉₀.

### TACKINESS ON THE SURFACES OF FORMED PRODUCTS

A silicone rubber cord having a circular cross-section was wound into a spiral form and heated for 4 hours at 200°C. It was considered that tackiness existed if contacting parts of the cord adhered to each other, and absent if these contacting parts did not adhere to each other.

### Practical Example 1

The following components were introduced into a kneader mixer and mixed to homogeneity at 170°C to provide a silicone rubber base compound: (i) 100 parts of a dimethylvinylsiloxy-endblocked methylvinylpolysiloxane gum with a degree of polymerisation of 5,000 and having 99.85 mole percent of dimethylsiloxane units and 0.14 mole percent of methylvinylsiloxane units, (ii) 50 parts of dry-process silica with a BET specific surface area of 200 m²/g, and (iii) 10.0 parts of silanol-endblocked dimethylsiloxane oligomer having a viscosity of 60mPa.s.

After the silicone rubber base compound had been cooled, an extrusion-grade silicone rubber composition was prepared by mixing the base compound with a first paste of 1.5 parts of a dimethylpolysiloxane oil paste comprising 50% by weight of an organoperoxide with the structure: 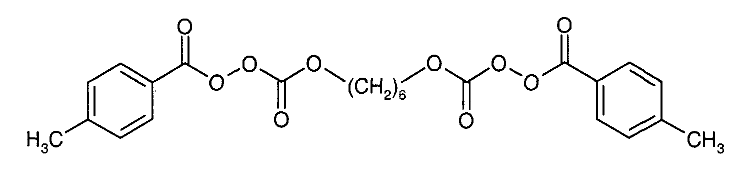 and 50% by weight of a dimethylpolysiloxane oil having a viscosity of 1000mPa.s and 0.5 parts by weight of a second paste comprising 50% by weight of dicumyl peroxide and 50% by weight of a dimethylpolysiloxane oil having a viscosity of 1000mPa.s, the amount of the respective pastes being introduced being based 100 parts of the silicone rubber base compound. The base compound and the pastes were mixed on a two-roll mill. The organoperoxide had a particle size analysis showing a maximum particle diameter of 50 µm and an average particle diameter of 20 µm. The silicone rubber composition was measured to determine its curing characteristics.

The extrusion-grade silicone rubber composition was also introduced into a single-screw extruder with a diameter of 65 mm and was extruded in the form of a cord of circular cross-section. Curing was carried out in a heating furnace for a period of 3 minutes at 250°C. The resulting cured product was subjected to the above described test to determine surface tackiness, the results for which are provided in Table 1 below.

### Practical Example 2

The following components were introduced into a kneader mixer and mixed to homogeneity at 170°C to provide a silicone rubber base compound: (i) 100 parts of a dimethylvinylsiloxy-endblocked methylvinylpolysiloxane gum with a degree of polymerisation of 5,000 and having 99.85 mole percent of dimethylsiloxane units and 0.14 mole percent of methylvinylsiloxane units, (ii) 50 parts of dry-process silica with a BET specific surface area of 200 m²/g, and (iii) 5.0 parts of silanol-endblocked dimethylsiloxane oligomer having a viscosity of 60mPa.s.

After the silicone rubber base compound had been cooled, an extrusion-grade silicone rubber composition was prepared by mixing the base compound with a first paste of 1.5 parts of a dimethylpolysiloxane oil paste comprising 50% by weight of an organoperoxide with the structure: 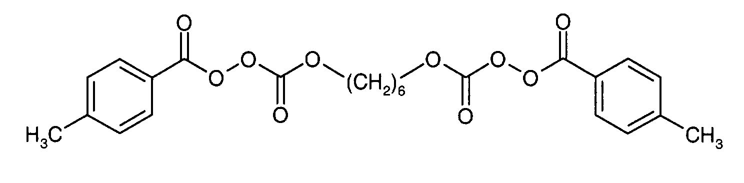 and 50% by weight of a dimethylpolysiloxane oil having a viscosity of 1000mPa.s and 0.5 parts by weight of a second paste comprising 50% by weight of 2,5-dimethyl-2,5-di (t-butylperoxy) hexane and 50% by weight of a dimethylpolysiloxane oil having a viscosity of 1000mPa.s, the amount of the respective pastes being introduced being based 100 parts of the silicone rubber base compound. The base compound and the pastes were mixed on a two-roll mill. The organoperoxide had a particle size analysis showing a maximum particle diameter of 50 µm and an average particle diameter of 20 µm. The silicone rubber composition was cured in the manner described in example 1, measured to determine its curing characteristics and was subjected to the above described test to determine surface tackiness, the results for which are provided in Table 1 below.

### Comparative Example 1

An extrudable silicone rubber composition was prepared and tested using the same methods as described in Practical Example 1, with the exception that 2.0 parts of the first silicone oil paste were used instead of 1.5 parts of the first silicone oil paste and 0.5 parts of the second silicone oil paste. The results are provided in Table 1 below

### Comparative Example 2

An extrudable silicone rubber composition was prepared and tested using the same methods as described in Practical Example 1, with the exception that 2.0 parts of the second silicone oil paste were used instead of 1.5 parts of the first silicone oil paste and 0.5 parts of the second silicone oil paste. The results are provided in Table 1 below

**Table 1**

| | Pr. Ex. 1 | Pr. Ex. 2 | Comp. Ex. 1 | Comp. Ex. 2 |
|---|---|---|---|---|
| Curing Properties | | | | |
| T₁₀ [sec] | 10 | 11 | 17 | 22 |
| T₉₀_[sec] | 29 | 31 | 62 | 88 |
| Tackiness | Absent | Absent | Present | Present |

On the basis of the results provided in Table 1 it will be appreciated that the combination of a specific organic peroxide of component (B) and an alkyl-type organic peroxide of component (C) provides a surprising synergistic effect by both increasing the cure speed and preventing, the post-cure problems of blooming and surface tackiness. The method of the invention ensures high productivity in the manufacture of formed articles extruded from the aforementioned silicone rubber composition.

## Claims

1. An extrudable silicone rubber composition comprising:
(A) a silicone rubber base compound comprising:-
a diorganopolysiloxane gum (a-1);
a treated or untreated reinforcing silica (a-2);
(B) an organic peroxide represented by the following general formula:
R - COOOCOO - R¹ - OOCOOOC - R
wherein R¹ is an alkylene group with 1 to 10 carbon atoms, R is selected from an alkyl group, an alkoxy group, an -SiR²₃ group, a -CH₂SiR²₃ group and a -Ph-R³_{*x*} group, R² is an alkyl or alkoxy group; Ph is a phenyl group when c is zero and a phenylene group when *x* is 1, 2 or 3; R³ is an alkyl group, an alkoxy group, an SiR²₃ group, or a -CH₂SiR²₃ group; *x* has a value of from 0 to 3; and
(C) an alkyl-type organic peroxide.

2. An extrudable silicone rubber composition in accordance with claims 1 comprising:
(A) 100 parts by weight of a silicone rubber base compound comprising:-
100 parts by weight of diorganopolysiloxane gum (a-1);
15 to 150 parts by weight of reinforcing silica (a-2);
0 to 50 parts by weight of a hydrophobing agent selected from one or more of an organochlorosilane, a hexaorganodisilazane or a silanol end-blocked diorganosiloxane oligomer (a-3);
(B) 0.1 to 10 parts by weight of organic peroxide (B); and
(C) 0.05 to 10 parts by weight of an alkyl-type organic peroxide.

3. The extrudable silicone rubber composition of Claim 1 or 2, wherein component (A) is a diorganopolysiloxane gum comprising a plurality of alkenyl groups.

4. The extrudable silicone rubber composition of Claim 3, wherein said alkenyl groups of component (A) are vinyl groups contained in an amount of 0.01 to 0.4 mole %.

5. The extrudable silicone rubber composition in accordance with any preceding claim, wherein component (B) is selected from one or more of the following:- 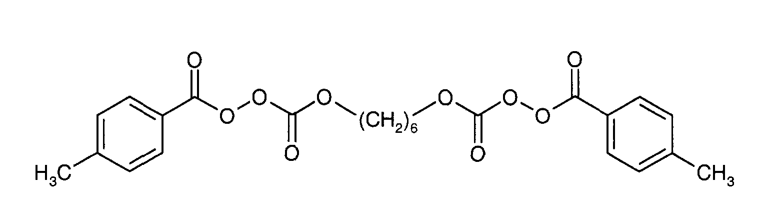 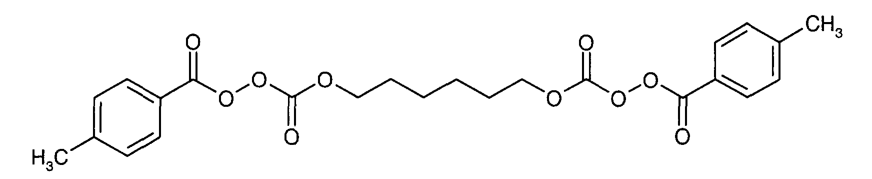 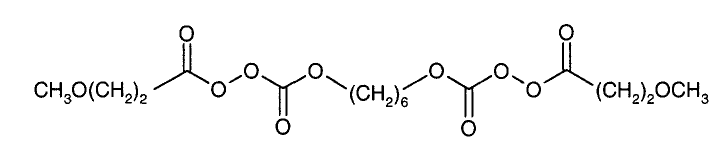 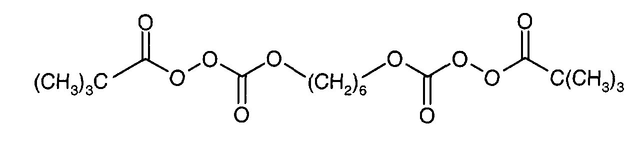 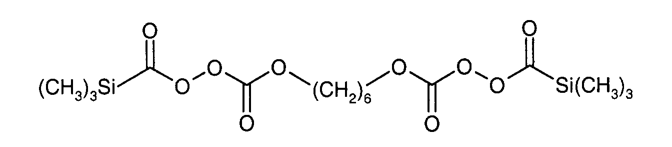 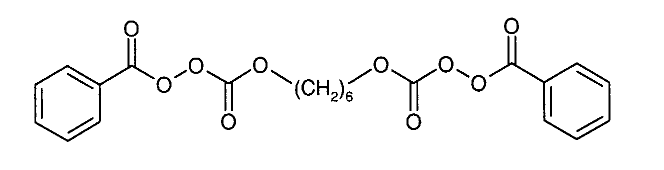 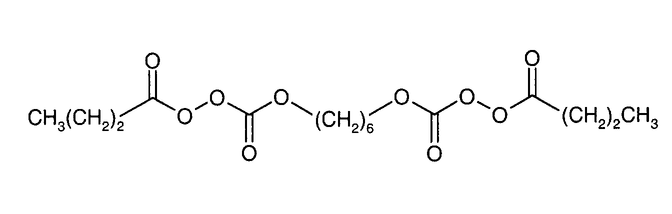 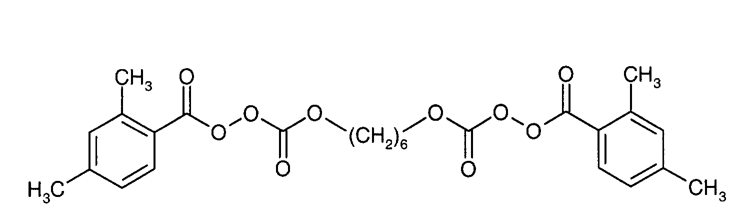 and

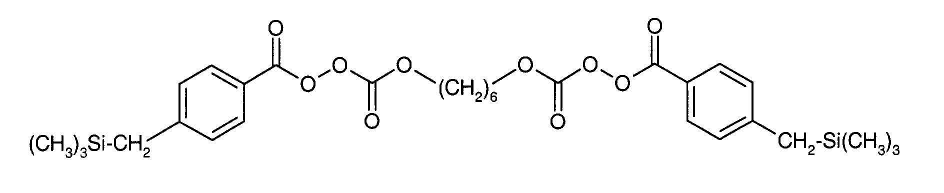

6. The extrudable silicone rubber composition in accordance with any preceding claim wherein component (C) is selected from one or more of the group comprising: dicumyl peroxide, 2,5-dimethyl-2,5-di (t-butylperoxy) hexane, di-t-butylperoxide, and t-butylcumylperoxide.

7. The extrudable silicone rubber composition of any preceding claim wherein component (B) is a granulated powder material with a grain size not exceeding 50 µm.

8. The extrudable silicone rubber composition of any preceding claim wherein component (B) and/or (C) is/are mixed separately or together in a paste dispersed in a dimethylpolysiloxane oil.

9. The extrudable silicone rubber composition in accordance with any preceding claim, wherein the time (T₁₀) required for a torque measured with the use of a model JSR Curastometer-III at 130°C/10 min. to reach 10% of the maximum value is 0.25 minutes or less and the time (T₉₀) required for a torque to reach 90% of the maximum value is 1.0 min. or less.

10. An article made from an extrudable silicone rubber composition in accordance with any one of claims 1 to 9, which is at least partially transparent.

11. Use of an article made from an extrudable silicone rubber composition in accordance with any one of claims 1 to 9 as a tube, tape, sheet, electrical wire coating, construction gaskets, for electric wires.

12. Use of an organic peroxide of the general formula
R - COOOCOO - R¹ - OOCOOOC - R
wherein R¹ is an alkylene group with 1 to 10 carbon atoms R is selected from an alkyl group, an alkoxy group, an - SiR²₃ group, a -CH₂SiR²₃ group and a -Ph-R³ₓ group
R² is an alkyl or alkoxy group; Ph is a phenyl group;
R³ is an alkyl group, an alkoxy group, or an SiR²₃ group;
*x* has a value of from 0 to 3; and
an alkyl-type organic peroxide, as a curing agent in a silicone rubber composition.

13. A silicone rubber curing agent composition comprising an organic peroxide represented by the following general formula:
R - COOOCOO - R¹ - OOCOOOC - R
wherein R¹ is an alkylene group with 1 to 10 carbon atoms, R is selected from an alkyl group, an alkoxy group, an -SiR²₃ group, a -CH₂SiR²₃ group and a -Ph-R³_{*x*} group, R² is an alkyl or alkoxy group; Ph is a phenyl group when c is zero and a phenylene group when *x* is 1, 2 or 3; R³ is an alkyl group, an alkoxy group, an SiR²₃ group, or a -CH₂SiR²₃ group; *x* has a value of from 0 to 3; and
an alkyl-type organic peroxide.
